# EUROPÄISCHE PATENTANMELDUNG

(11) **EP 4 362 432 A1**
(43) Veröffentlichungstag der Anmeldung: **01.05.2024**
(21) Anmeldenummer: 22204335.8
(22) Anmeldetag: 28.10.2022
(51) Int. Cl.: H04L 67/55, H04L 47/70, H04L 45/00

(54) **VERFAHREN ZUM BEREITSTELLEN EINER ODER MEHRERER PUBLISH-SUBSCRIBE-KOMMUNIKATIONSVERBINDUNGEN IN EINEM BROKER-BASIERTEN PUBLISH-SUBSCRIBE-NETZWERK AN MINDESTENS EINE ANWENDUNG, VERFAHREN ZUR KOMMUNIKATION IN EINEM BROKER-BASIERTEN PUBLISH-SUBSCRIBE-NETZWERK UND BROKER-BASIERTES PUBLISH-SUBSCRIBE-NETZWERK**

(71) Anmelder: Siemens Aktiengesellschaft, 80333 München (DE)
(72) Erfinder: Sauer, Markus, 81739 München (DE); Sedlacek, Matous, 84034 Landshut (DE)
(74) Vertreter: Siemens Patent Attorneys

(57) **Zusammenfassung**

Verfahren zum Bereitstellen einer oder mehrerer Publish-Subscribe-Kommunikationsverbindungen in einem brokerbasierten Publish-Subscribe-Netzwerk an mindestens eine Anwendung, Verfahren zur Kommunikation in einem brokerbasierten Publish-Subscribe-Netzwerk und broker-basiertes Publish-Subscribe-Netzwerk

Bei dem Verfahren zum Bereitstellen einer oder mehrerer Publish-Subscribe-Kommunikationsverbindung in einem brokerbasierten Publish-Subscribe-Netzwerk an mindestens eine Anwendung (APPC1) wird mindestens eine Anforderung (1) der mindestens einen Anwendung (APPC1) an die Datenfluss-Qualität entgegengenommen und eine Netzwerkkonfiguration für die eine oder mehreren Publish-Subscribe-Kommunikationsverbindungen abhängig von der Datenfluss-Qualität gewählt und ein virtuelles Netzwerk (NW) mit dieser Netzwerkkonfiguration herangezogen und die eine oder mehreren Publish-Subscribe-Kommunikationsverbindungen mit diesem Netzwerk realisiert.

## Beschreibung

Verfahren zum Bereitstellen einer oder mehrerer Publish-Subscribe-Kommunikationsverbindungen in einem brokerbasierten Publish-Subscribe-Netzwerk an mindestens eine Anwendung, Verfahren zur Kommunikation in einem brokerbasierten Publish-Subscribe-Netzwerk und broker-basiertes Publish-Subscribe-Netzwerk

Die Erfindung betrifft ein Verfahren zum Bereitstellen einer oder mehrerer Publish-Subscribe-Kommunikationsverbindungen in einem broker-basierten Publish-Subscribe-Netzwerk an mindestens eine Anwendung sowie ein Verfahren zur Kommunikation in einem broker-basierten Publish-Subscribe-Netzwerk und ein broker-basiertes Publish-Subscribe-Netzwerk.

In Industrieanwendungen werden zunehmend softwareimplementierte Anwendungen eingesetzt, welche in datenzentrierten Systemen realisiert sind. Solche software-basierte Anwendungen nutzen regelmäßig broker-basierte Publish-Subscribe-Kommunikation. Bekannte broker-basierte Implementierungen für Publish-Subscribe-Kommunikation nutzen insbesondere das MQTT-Protokoll (MQTT = (engl.) "Message Queuing Telemetry Transport", s. https://en.wikipedia.org/wiki/MQTT) für software-basierte Anwendungen.

In broker-basierten Publish-Subscribe-Netzwerken verbinden sich Knoten mit einem Broker oder einem Broker-Cluster, welches oder welcher Veröffentlichungen und Abonnements über spezifische Identifier, im Falle des MQTT-Protokolls Topics oder Themen, zur Kommunikation mit anderen Knoten erlaubt.

Die Broker routen die zu einer Veröffentlichung gehörenden, d. h. die veröffentlichten, Daten zu einem spezifischen Identifier, einem sogenannten Thema in MQTT, zu allen Knoten, die zu diesem Thema, auch als Topic bezeichnet, Veröffentlichungen abonniert haben.

Eine Publish-Subscribe-Kommunikation beruht regelmäßig auf unterliegenden Netzwerken, die eine von der jeweiligen mindestens einen Anwendung angestrebte Datenfluss-Qualitäten nicht zwingend gewährleistet. Bestimmte Datenfluss-Qualitäten sind jedoch häufig erforderlich.

Es ist vor diesem Hintergrund des Standes der Technik Aufgabe der Erfindung, ein verbessertes Verfahren zum Bereitstellen einer oder mehrerer Publish-Subscribe-Kommunikationsverbindungen in einem broker-basierten Publish-Subscribe-Netzwerk an mindestens eine Anwendung sowie ein verbessertes Verfahren zur Kommunikation in einem broker-basierten Publish-Subscribe-Netzwerk anzugeben. Zudem ist es Aufgabe der Erfindung, ein verbessertes broker-basiertes Publish-Subscribe-Netzwerk zu schaffen.

Diese Aufgabe der Erfindung wird mit einem Verfahren zum Bereitstellen einer Publish-Subscribe-Kommunikationsverbindung in einem broker-basierten Publish-Subscribe-Netzwerk an mindestens eine Anwendung mit den in Anspruch 1 angegebenen Merkmalen und mit einem Publish-Subscribe-Netzwerk mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Bereitstellen einer oder mehrerer Publish-Subscribe-Kommunikationsverbindungen in einem broker-basierten Publish-Subscribe-Netzwerk an mindestens eine Anwendung wird mindestens eine Anforderung der mindestens einen Anwendung an die Datenfluss-Qualität entgegengenommen und es wird eine Netzwerkkonfiguration für die eine oder mehreren Publish-Subscribe-Kommunikationsverbindungen abhängig von der Datenfluss-Qualität gewählt und es wird ein virtuelles Netzwerk mit dieser Netzwerkkonfiguration herangezogen und die eine oder mehreren Publish-Subscribe-Kommunikationsverbindung werden mit diesem Netzwerk realisiert.

Mittels des erfindungsgemäßen Verfahrens hängt die erzielte Datenfluss-Qualität bei einer Publish-Subscribe-Kommunikation in einem Publish-Subscribe-Netzwerk nicht zufällig von der Datenfluss-Qualität des herangezogenen Netzwerks ab, sondern das virtuelle Netzwerk wird gezielt abhängig von einer angestrebten Datenfluss-Qualität bei der Publish-Subscribe-Kommunikation herangezogen. Auf diese Weise muss sich nicht auf anhand sonstiger Kriterien ausgewählte oder aufgesetzte virtuelle Netzwerke verlassen werden. Eine Publish-Subscribe-Kommunikation, die insbesondere im industriellen Umfeld eine bestimmte Datenfluss-Qualität voraussetzt, kann mittels des erfindungsgemäßen Verfahrens einfach und planbar umgesetzt werden. Die mindestens eine Anforderung der Datenfluss-Qualität kann insbesondere mittels einer Anwendungsschnittstelle, vorzugsweise in der Art einer API (API = (engl.) "application programming interface"), realisiert werden, welche für eine Initiierung einer Publish-Subscribe-Kommunikation ohnehin regelmäßig genutzt wird. Besonders bevorzugt wird eine solche Anwendungsschnittstelle für die Anforderung der Datenfluss-Qualität erweitert, sodass die Anwendungsschnittstelle für die mindestens eine Anforderung der Datenfluss-Qualität und zugleich für die Initiierung der Publish-Subscribe-Kommunikation im Übrigen genutzt, d. h. herangezogen, wird. Das erfindungsgemäße Verfahren erlaubt es also, dedizierte Datenflussqualitätsanforderungen zu berücksichtigen und netzwerkspezifische Mechanismen zur Datenflussqualitätskontrolle zu nutzen.

Bei dem erfindungsgemäßen Verfahren ist oder sind in einer vorteilhaften Weiterbildung die eine oder mehreren Publish-Subscribe-Kommunikationsverbindung/en eine oder mehrere Publish-Verbindung/en der mindestens einen Anwendung. Im industriellen Umfeld können somit Publish-Verbindungen mit vorab festgelegter Datenfluss-Qualität realisiert werden.

In einer zur vorhergehenden Weiterbildung alternativen oder zusätzlichen Weiterbildung der Erfindung ist oder sind die eine oder mehreren Publish-Subscribe-Kommunikationsverbindung/en eine oder mehrere Subscribe-Verbindung/en der mindestens einen Anwendung. Im industriellen Umfeld können in dieser Weiterbildung der Erfindung Subscribe-Verbindungen mit vorab festgelegter Datenfluss-Qualität realisiert werden.

Bei dem erfindungsgemäßen Verfahren wird vorteilhaft ein Broker für die eine oder mehreren Publish-Subscribe-Kommunikationsverbindungen mit dem Netzwerk instanziiert.

Zweckmäßig wird bei dem Verfahren gemäß der Erfindung der Broker abhängig von der Netzwerkkonfiguration mit einer Brokerkonfiguration konfiguriert.

Geeigneterweise wird bei dem erfindungsgemäßen Verfahren das Netzwerk und/oder der Broker und/oder die Brokerkonfiguration abhängig von der Datenfluss-Qualität ausgewählt. Insbesondere kann ein virtuelles Netzwerk derart aufgesetzt oder ausgewählt werden, dass es die die mittels der mindestens einen Anforderung angeforderte Datenfluss-Qualität gewährleistet. Ebenso können Broker und/oder Brokerkonfiguration abhängig von der mittels der mindestens einen Anforderung geforderten Datenfluss-Qualität gewählt oder aufgesetzt werden.

Bei dem Verfahren wird in einer vorteilhaften Weiterbildung der Erfindung das Netzwerk abhängig von der Datenfluss-Qualität mit der Netzwerkkonfiguration konfiguriert.

Vorteilhaft ist bei dem erfindungsgemäßen Verfahren das Netzwerk mit einem 5G-Netzerk oder mit einem 6G-Netzwerk realisiert. Insbesondere 5G- und/oder 6G-Netzwerke finden im industriellen Umfeld Verbreitung und werden bislang nicht routinemäßig für Publish-Subscribe-Kommunikation eingesetzt. Das erfindungsgemäße Verfahren nutzt in dieser Weiterbildung vorteilhaft 5G- und/oder 6G-Netzwerken mit der angestrebten Datenfluss-Qualität.

Zweckmäßig wird oder werden bei dem erfindungsgemäßen Verfahren die eine oder mehreren Publish-Subscribe-Kommunikationsverbindungen für einen Fertigungsprozess und/oder einen Wartungsprozess und/oder einen Logistikprozess herangezogen. Gerade im industriellen Umfeld wie insbesondere bei Fertigungsprozessen und/oder Wartungsprozessen und/oder Logistikprozessen ist die Gewährleistung einer bestimmten Datenfluss-Qualität besonders vorteilhaft.

Das erfindungsgemäße broker-basierte Publish-Subscribe-Netzwerk weist vorzugsweise einen oder mehrere Subscriber und/oder einen oder mehrere Publisher auf und ist insbesondere zur Ausführung eines erfindungsgemäßen Verfahrens wie vorhergehend erläutert ausgebildet und weist eine Datenfluss-Komponente auf, die mindestens eine Anforderung für eine Datenfluss-Qualität einer oder mehrerer Publish-Subscribe-Kommunikationsverbindungen in diesem Publish-Subscribe-Netzwerk entgegennimmt und welche ausgebildet ist, ein Konfigurieren eines virtuellen Netzwerks abhängig von der Datenfluss-Qualität zu initiieren. Insbesondere wird ein Netzwerk abhängig von der Datenfluss-Qualität aufgesetzt und konfiguriert oder entsprechend der mittels der mindestens einen Anforderung angeforderten Datenfluss-Qualität ausgewählt. Zweckmäßig ist oder sind die eine oder mehreren Publish-Subscribe-Kommunikationsverbindung/en eine oder mehrere Publish-Subscribe-Kommunikationsverbindung/en einer Publish-Subscribe-Kommunikation, insbesondere eine Publish-Kommunikation und/oder eine Subscribe-Kommunikation.

Das erfindungsgemäße broker-basierte Publish-Subscribe-Netzwerk weist bevorzugt eine Netzwerk-Komponente auf, welche ausgebildet ist, abhängig von der Datenfluss-Qualität und initiiert durch die Datenflusskomponente eine Netzwerkkonfiguration für das virtuelle Netzwerk zu ermitteln. Zweckmäßig hängt die Netzwerkkonfiguration von der Datenfluss-Qualität ab und konfiguriert das virtuelle Netzwerk zur Erzielung dieser Datenfluss-Qualität. Alternativ und ebenfalls vorteilhaft ermittelt die Netzwerk-Komponente dasjenige Netzwerk, welches eine solche Netzwerkkonfiguration aufweist, welche diese Datenfluss-Qualität garantiert.

Das erfindungsgemäße broker-basierte Publish-Subscribe-Netzwerk weist bevorzugt eine Netzwerksteuerungs-Komponente auf, welche ausgebildet ist, abhängig von der Datenfluss-Qualität eine das virtuelle Netzwerk zu konfigurieren.

Nachfolgend wird die Erfindung anhand in der Zeichnung dargestellter Ausführungsbeispiele näher erläutert. Es zeigen:
- Fig. 1: Ein erstes Ausführungsbeispiel eines erfindungsgemäßen Verfahrens bei der Einrichtung eines Abonnements SUB einer Veröffentlichung PUB durch eine Anwendungskomponente APPC1 mittels eines einzurichtenden Brokers BRK mit anfänglichen Verfahrensschritten schematisch in einer diagrammatischen Darstellung,
- Fig. 2: weitere Verfahrensschritte des erfindungsgemäßen Verfahrens schematisch in einer diagrammatischen Darstellung, sowie
- Fig. 3: weitere Verfahrensschritte des erfindungsgemäßen Verfahrens schematisch in einer diagrammatischen Darstellung umfassend eine Einrichtung einer zum Abonnement SUB zugehörigen Veröffentlichung PUB schematisch in einer diagrammatischen Darstellung.

Bei dem in den Figuren gezeigten Ausführungsbeispiel werden die herkömmlich für broker-basierte Publish-Subscribe-Kommunikation eines Publish-Subscribe-Netzwerks verwendeten Anwendungsschnittstellen angepasst und erweitert. Unter Anwendungsschnittstellen werden im Rahmen der vorliegenden Erfindung sogenannte API (engl. = "application programming interface") verstanden, welche auch als Programmierschnittstellen bezeichnet werden. Die Anwendungsschnittstellen werden um zusätzliche Parameter ergänzt, welche die gewünschten Datenfluss-Qualitäten enthalten, die im Rahmen dieser Anmeldung auch als Quality-of-Service, kurz QoS, bezeichnet werden. Solche Datenfluss-Qualitäten werden von Anwendungskomponenten APPC1 je nach Zielsetzung der Publish-Subscribe-Kommunikation gefordert. Die gewünschten Datenfluss-Qualitäten werden von drei zusätzlich vorgesehenen Komponenten eines Publish-Subscribe-Netzwerks herangezogen. Diese zusätzlichen Komponenten umfassen einen QoS-Manager QOSM, einen Local-Network-Manager LONM und einen Network-Controller NWC.

Mittels dieser drei Komponenten wird für jeden Aufruf der Anwendungsschnittstellen zur Einleitung eines Publikations- oder eines Abonnement-Vorgangs eine Netzwerkkonfiguration eines virtuellen Netzwerks NW, beispielsweise eines LAN-Netzwerks, aufgesetzt oder alternativ ausgewählt, wenn die Netzwerkkonfiguration zuvor bereits aufgesetzt worden ist. Die Netzwerkkonfiguration gewährleistet die Datenfluss-Qualitäten wie sie in den Parametern der angepassten Anwendungsschnittstellen für die Publish-Subscribe-Kommunikation enthalten sind.

Zusätzlich wird mittels dieser Netzwerkkonfiguration ein spezifischer Broker BRK aufgesetzt, der die gesamte Publish-Subscribe-Kommunikation innerhalb der Netzwerkkonfiguration für eine spezifische Datenfluss-Qualitätorchestriert.

Um dies zu gewährleisten, werden die oben genannten zusätzlichen Komponenten wie nachfolgend beschrieben eingesetzt:
Der QoS-Manager QOSM ist eine abgeleitete Instanz eines herkömmlichen MQTT-Clients MQTTC, die mit dem Local-Network-Manager LONM in Publish-Subscribe-Kommunikationsverbindung 2 steht. Eine Anwendungskomponente APPC1 sendet an den QoS-Manager QOSM eine Anforderung 1 an eine Datenfluss-Qualität im Rahmen der ohnehin eingesetzten Anwendungsschnittstellen, welche um die Anforderung 1 ergänzt sind. Der QoS-Manager QOSM sendet 2 die gewünschten Datenfluss-Qualitäten an den Local-Network-Manager LONM. Der QoS-Manager QOSM fungiert dabei als Schnittstelle zwischen der Anwendungskomponente APPC1, den Local-Network-Manager LONM, und dem herkömmlichen MQTT-Client MQTTC. Der QoS-Manager QOSM nimmt die Anforderung 1 der Anwendungsschnittstelle durch die Anwendungskomponente APPC1 entgegen und leitet 26 diese an den passenden MQTT-Client MQTTC und somit an das passende Netzwerk mit der passenden Netzwerkkonfiguration für die jeweils gewünschten Datenfluss-Qualitäten weiter. In der umgekehrten Richtung leitet 26 der QoS-Manager QOSM die vom MQTT-Clienten MQTTC empfangenen Daten an die Anwendungskomponente APPC1 weiter. Zusätzlich gewährleistet der QoS-Manager QOSM die geforderte neue Netzwerkkonfiguration und/oder Infrastruktur-Komponenten wie einen zu den Datenfluss-Qualitäten passenden Broker BRK. Aus der Perspektive der Anwendungskomponente APPC1 bildet der QoS-Manager die Schnittstelle zur Middleware des Publish-Subscribe-Netzwerks und erweitert die Anwendungsschnittstellen.

Der Local-Network-Manager LONM nimmt die Datenfluss-Qualitäten vom QoS-Manager QOSM mittels der Anforderung entgegen und meldet die geforderten Netzwerkparameter für die Netzwerkkonfiguration zurück. Der Local-Network-Manager LONM ist das anwendungsseitige Gegenstück des Network-Controllers NWC. Wenn eine Netzwerkkonfiguration für die gewünschten Datenfluss-Qualitäten noch nicht existiert, stößt der Local-Network-Manager das Aufsetzen 4a, 4b, 4c einer solchen Netzwerkkonfiguration, welche die gewünschten Datenfluss-Qualitäten aufweist, an. Dazu sendet der Local-Network-Manager LONM ein Triggersignal an den Network-Controller NWC. Wenn eine Netzwerkkonfiguration bereit ist, die gewünschten Datenfluss-Qualitäten umzusetzen, stellt der Local-Network-Manager auch sicher, dass ein für diese Netzwerkkonfiguration spezifischer Broker BRK bereitsteht.

Der Network-Controller NWC nimmt die gewünschten Datenfluss-Qualitäten und somit die entsprechenden Netzwerkanforderungen mittels des Triggersignals von dem Local-Network-Manager LONM entgegen. Der Network-Controller NWC konfiguriert 4c, 4b, 4a das Netzwerk NW, eine zugehörige Netzwerkschnittstellenkarte NWS, zugehörige 5G Endpunkte FIVG und ein virtuelles Netzwerk NW, um die gewünschten Datenfluss-Qualitäten bereitzustellen. Die resultierenden Parameter der Netzwerkkonfiguration sendet der Network-Controller NWC zurück an den Local-Network-Manager LNM.

Die grundlegenden Schritte werden nachfolgend näher erläutert:
Das erfindungsgemäße Verfahren wird anhand von zwei Verfahrensteilen dargestellt:
Der erste Verfahrensteil umfasst das Anstoßen des einzelnen Verfahrensschritte und das Aufsetzen der neuen Netzwerkkonfiguration und eines für diese Netzwerkkonfiguration zugehörigen Brokers für die jeweiligen Datenfluss-Qualitäten zur Realisierung des Abonnements SUB und der Veröffentlichung PUB.

Der zweite Verfahrensteil umfasst das Veröffentlichen und das Abonnieren der Datenflüsse für die mittels des ersten Verfahrensteils eingerichtete Netzwerkkonfigurationen für die gewünschte Datenfluss-Qualität.

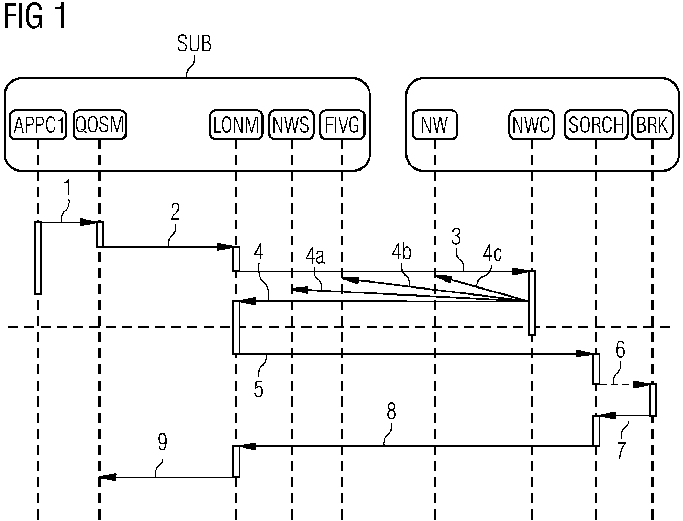

Der erste Verfahrensteil umfasst die nachfolgend genannten Verfahrensschritte wie in Fig. 1 dargestellt:
In einem ersten Schritt 1 nutzt eine Anwendungskomponenten APPC1 die erweiterten Anwendungsschnittstellen für die Publish-Subscribe-Kommunikation indem entweder für ein bestimmtes Thema Abonnements eingerichtet oder Veröffentlichungen angestoßen werden. Dazu kommuniziert die Anwendungskomponente APPC1 mit dem QoS-Manager QOSM. Beispielsweise fragt die Anwendungskomponente APPC1 mittels der Anforderung 1 ein Abonnement zu einem Thema und übergibt die Parameter "Thema", "Optionen" und "Datenfluss-Qualitäten", wobei "Thema" das Thema, zu welchem abonniert werden soll und wie es durch das MQTT-Protokoll definiert wird, bezeichnet. "Optionen" bezeichnen die MQTT-Optionen MQTT-Protokolls und "Datenfluss-Qualitäten" bezeichnen gewünschte Datenfluss-Qualitäten in Form von Anforderungen an den Datenfluss, welche sowohl das Netzwerk NW als auch die Anwendungskomponente APPC1 erfüllen müssen.

In diesem Ausführungsbeispiel gibt es noch keine Netzwerkkonfiguration und keinen Broker, welche diese Anforderungen an den Datenfluss bereits erfüllen.

Der QoS-Manager QOSM validiert die Abonnementanfrage und die übermittelten Parameter und identifiziert eine Netzwerkkonfiguration, mit welchen ein Netzwerk NW für eine Gewährleistung der gewünschten Datenfluss-Qualitäten eingerichtet werden muss. Der QoS-Manager sendet eine Einrichtungsanfrage 2 für eine Einrichtung des Netzwerks NW mit den gewünschten Datenfluss-Qualitäten zum Local-Network-Manager LONM.

Der Local-Network-Manager LONM validiert die Einrichtungsanfrage und delegiert 3 die Einrichtungsanfrage an den Network-controller NWC.

Der Networkcontroller NWC prüft zunächst die Verfügbarkeit entsprechender Ressourcen. Ist dieses Prüfen erfolgreich, so stößt der Networkcontroller NWC die Netzwerkkonfiguration für alle Knoten, die an der entsprechenden Publish-Subscribe-Kommunikation beteiligt sind, an und reserviert die erforderlichen Ressourcen des Netzwerks NW.

Nach erfolgreicher Einrichtung der Netzwerkkonfiguration innerhalb des Publish-Subscribe-Netzwerks meldet der Network-Controller NWC alle erforderlichen Kommunikationsparameter für die Netzwerkkonfiguration zurück an den Local-Network-Manager LONM.

Der Local-Network-Manager LONM nutzt die Kommunikationsparameter, um das Instanziieren 6, 7 eines Brokers BRK für diese Netzwerkkonfiguration und somit die Datenfluss-Qualitäten im Systems-Service-Orchestration-Framework SORCH anzustoßen 5.

Das Systems-Service-Orchestration-Framework SORCH instanziiert 6, 7 und konfiguriert einen Broker BRK für diese Netzwerkkonfiguration und meldet 8 die zugehörige Brokerkonfiguration zum Local-Network-Manager LONM zum Abschluss der Einrichtung des Brokers BRK und zum Start des Brokers BRK zurück.

Der Local-Network-Manager LONM meldet 9 die Brokerkonfiguration an den QoS-Manager QOSM zurück.

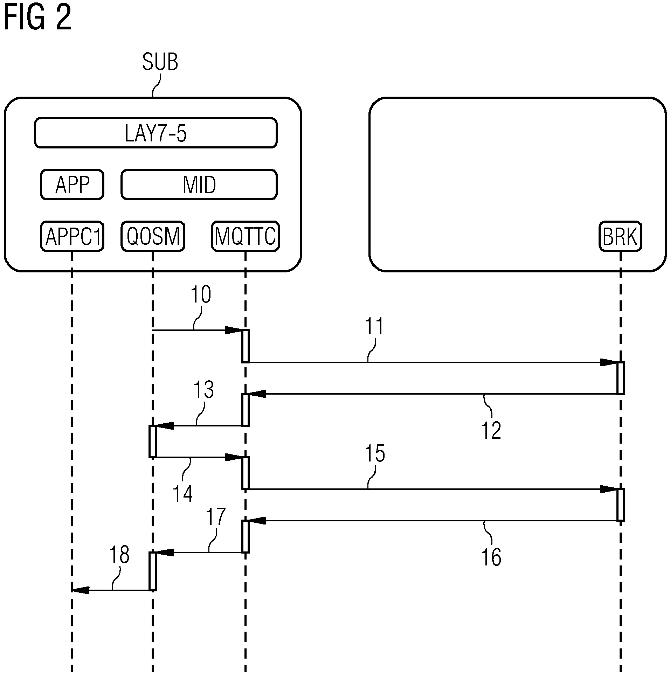

Der QoS-Manager QOSM instanziiert 10, 13, 14, 17 wie in Fig. 2 dargestellt einen MQTT-Client MQTTC, der sich mit dem Broker BRK gemäß der Brokerkonfiguration verbindet 11, 12, 15, 16.

Nach erfolgreichem Verbinden 11, 12, 15, 16 instanziiert der QoS-Manager das erstmalige Abonnement und etabliert 18 die notwendige Kommunikation zwischen der Anwendungskomponente APPC1 und dem MQTT-Client MQTTC, im dargestellten Ausführungsbeispiel mittels Callbacks.

Abschließend sind die Netzwerkkonfiguration und die zugehörige Netzwerkeinrichtung abgeschlossen und mit dem eigens vorgesehenen Broker BRK funktionsbereit und können alle Abonnements und Veröffentlichungen für die gewünschten Datenfluss-Qualitäten verarbeiten, solange die erforderlichen Ressourcen bereitstehen.

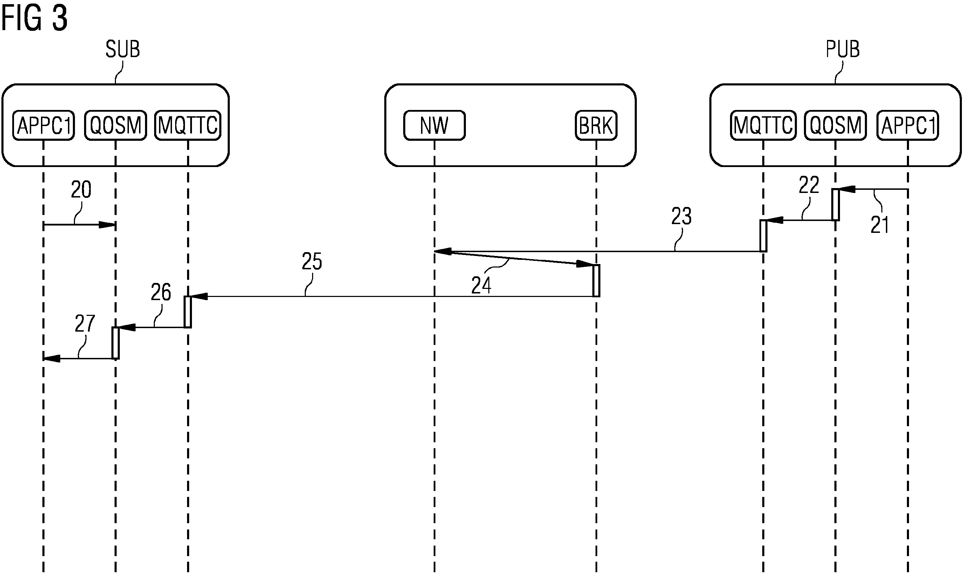

Der zweite Verfahrensteil ist in Fig. 3 dargestellt und umfasst die nachfolgend genannten Verfahrensschritte wie nachfolgend beschrieben:
In diesem zweiten Verfahrensteil sind das Netzwerk NW und der für dieses vorgesehene Broker BRK bereits für die geforderte Datenfluss-Qualität wie oben beschrieben eingerichtet.

Eine Anwendungskomponente APPC1 nutzt die erweiterten Anwendungsschnittstellen des Publish-Subscribe-Netzwerks für ein Abonnement SUB oder eine Veröffentlichung PUB zu einem bestimmten Thema mittels des QoS-Managers QOSM. Beispielsweise stellt eine weitere Anwendungskomponente APPC1 eine Veröffentlichungsanfrage 21 mit den Parametern "Thema", "Nachricht", "Optionen" und "Datenfluss-Qualitäten", wobei "Thema" das Thema, zu welchem veröffentlicht werden soll und wie es durch das MQTT-Protokoll definiert wird, bezeichnet. "Nachricht" bezeichnet das Nachrichtenvolumen wie im MQTT-Protokoll definiert, Optionen die MQTT-Optionen des MQTT-Protokolls. "Datenfluss-Qualitäten" bezeichnet die Datenfluss-Qualitäten für den Datenfluss, welche von der Anwendungskomponente APPC1 und dem Netzwerk NW erfüllt werden müssen.

Nachfolgend validiert der QoS-Manager QOSM die Veröffentlichungsanfrage 21, die zugehörigen Parameter und die zugehörigen Datenfluss-Qualitäten.

Wenn bereits eine zu den Datenfluss-Qualitäten passende Netzwerkkonfiguration besteht, findet der QoS-Manager QOSM die zugehörige Brokerkonfiguration auf und nutzt den zugehörigen MQTT-Client MQTTC um Nachrichten an entsprechenden Broker BRK für diese Datenfluss-Qualitäten zu übermitteln 23, 24.

Bei dem beschriebenen Ausführungsbeispiel sind daher die folgenden Eigenschaften umgesetzt:
Jeder Satz von Datenfluss-Qualitäten wird jeweils einem eigenen Broker zugeordnet und es wird für jeden Satz von Datenfluss-Qualitäten eine eigene Netzwerkkonfiguration vorgesehen.

Entsprechend wird die Publish-Subscribe-Kommunikation mit dem erfindungsgemäßen Verfahren realisiert und die Daten werden zwischen der Anwendungskomponente APPC1 mit dem Abonnement und der Anwendungskomponente APPC1 mit der Veröffentlichung übertragen.

Themen mit demselben Satz von Datenfluss-Qualitäten können mittels derselben Netzwerkkonfiguration und/oder demselben Browser verarbeitet werden. Dies hängt von dem Ergebnis der jeweiligen Validierung von verfügbaren Ressourcen und Kapazitäten ab, wenn neue Publish-Subscribe-Kommunikationsverbindungen vorgesehen sind, etwa neue Veröffentlichungen und/oder Abonnements eingerichtet werden.

Alle zentralisierten Komponenten, etwa der Network-Controller NWC und/oder der Broker BRK können in weiteren, nicht eigens dargestellten Ausführungsbeispielen auch dezentral realisiert sein.

## Patentansprüche

1. Verfahren zum Bereitstellen einer oder mehrerer Publish-Subscribe-Kommunikationsverbindungen in einem broker-basierten Publish-Subscribe-Netzwerk an mindestens eine Anwendung (APPC1), bei welchem mindestens eine Anforderung (1) der mindestens einen Anwendung (APPC1) an die Datenfluss-Qualität entgegengenommen wird und eine Netzwerkkonfiguration (3, 4a, 4b, 4c, 4,) für die eine oder mehreren Publish-Subscribe-Kommunikationsverbindungen abhängig von der Datenfluss-Qualität gewählt wird und ein virtuelles Netzwerk (NW) mit dieser Netzwerkkonfiguration herangezogen wird und die eine oder mehreren Publish-subscribe-Kommunikationsverbindungen mit diesem Netzwerk realisiert (21, 22, 23, 24, 25, 27, 27) werden.

2. Verfahren nach dem vorhergehenden Anspruch, bei welchem die eine oder mehreren Publish-Subscribe-Kommunikationsverbindungen eine oder mehrere Publish-Verbindungen der mindestens einen Anwendung (APPC1) sind.

3. Verfahren nach einem der vorhergehenden Ansprüche, bei welchem die eine oder mehreren Publish-Subscribe-Kommunikationsverbindungen eine oder mehrere Subscribe-Verbindungen der mindestens einen Anwendung (APPC1) sind.

4. Verfahren nach einem der vorhergehenden Ansprüche, bei welchem ein Broker (BRK) für die eine oder mehreren Publish-Subscribe-Kommunikationsverbindungen mit dem Netzwerk (NW) instanziiert wird.

5. Verfahren nach einem der vorhergehenden Ansprüche, bei welchem der Broker (BRK) abhängig von der Netzwerkkonfiguration mit einer Brokerkonfiguration konfiguriert wird.

6. Verfahren nach einem der vorhergehenden Ansprüche, bei welchem das Netzwerk (NW) und/oder der Broker und/oder die Brokerkonfiguration abhängig von der Datenfluss-Qualität ausgewählt wird.

7. Verfahren nach einem der vorhergehenden Ansprüche, bei welchem das Netzwerk (NW) abhängig von der Datenfluss-Qualität mit der Netzwerkkonfiguration konfiguriert wird.

8. Verfahren nach einem der vorhergehenden Ansprüche, bei welchem das Netzwerk (NW) mit einem 5G-Netzerk oder mit einem 6G-Netzwerk realisiert ist.

9. Verfahren nach einem der vorhergehenden Ansprüche, bei welchem die eine oder mehreren Publish-Subscribe-Kommunikationsverbindungen für einen Fertigungsprozess und/oder einen Wartungsprozess und/oder einen Logistikprozess herangezogen werden.

10. Broker-basiertes Publish-Subscribe-Netzwerk, insbesondere ausgebildet zur Ausführung eines Verfahrens nach einem der vorhergehenden Ansprüche, welches eine Datenfluss-Komponente (QOSM) aufweist, die mindestens eine Anforderung für eine Datenfluss-Qualität entgegennimmt und welche ausgebildet ist, ein Konfigurieren eines virtuellen Netzwerks (NW) abhängig von der Datenfluss-Qualität zu initiieren.

11. Broker-basiertes Publish-Subscribe-Netzwerk nach einem der vorhergehenden Ansprüche, aufweisend eine Netzwerk-Komponente (LONM), die ausgebildet ist, abhängig von der Datenfluss-Qualität und initiiert durch die Datenflusskomponente eine Netzwerkkonfiguration für das virtuelle Netzwerk (NW) zu ermitteln.

12. Broker-basiertes Publish-Subscribe-Netzwerk nach einem der vorhergehenden Ansprüche, aufweisend eine Netzwerksteuerungs-Komponente (NWC), welche ausgebildet ist, abhängig von der Datenfluss-Qualität eine das virtuelle Netzwerk (NW) zu konfigurieren.
